# EUROPEAN PATENT SPECIFICATION

(11) **EP 2 683 772 B1**
(45) Date of publication and mention of the grant of the patent: **08.07.2015**
(21) Application number: 12708027.3
(22) Date of filing: 09.03.2012
(51) Int. Cl.: C08L 23/14, B32B 27/32, C08J 5/18

(54) **SEALABLE, ANTIFOG COMPOSITION FOR HEAT SEALABLE FILMS AND EASY-OPEN PACKAGES OBTAINED THEREFROM**
VERSIEGELBARE ANTINEBELZUSAMMENSETZUNG FÜR HITZEVERSIEGELBARE FILME UND SICH LEICHT ÖFFNENDE VERPACKUNGEN DARAUS
COMPOSITION ANTIBUÉE SCELLABLE POUR FILMS THERMOSCELLABLES ET EMBALLAGES À OUVERTURE FACILE OBTENUS À PARTIR DE CELLE-CI

(30) Priority: 11.03.2011 EP 11157983
(43) Date of publication of application: 15.01.2014
(73) Proprietor: Cryovac, Inc., Duncan, South Carolina 29334 (US)
(72) Inventor: DELLA BIANCA, Serena, I-20017 Rho (MI) (IT); FRANCINI, Giorgia, I-20020 Arese (MI) (IT); LIPEROTI, Antonio, I-21040 Origgio (VA) (IT); PALEARI, Mario, I-20010 Pogliano Milanese (MI) (IT); RICCIO, Marina, I-20152 Milan (IT)
(74) Representative: Fraire, Cristina
(86) International application number: PCT/EP2012/054110
(87) International publication number: WO 2012/123357

(56) References cited:
- EP-A1- 1 563 990
- US-B1- 6 358 622

## Description

### Technical Field

The present invention relates to easy to open packages, to the film used in said package and to the heat sealable antifog composition used therein

### Background Art

Heat sealable films are used in a variety of food and non-food packaging applications to provide packages. In the art of packaging there is a need for films which can be used, either alone or in combination with another film or with containers, to securely package articles and at the same time allow easy opening of the package, both in rigid and in flexible packaging applications.

A package is defined as an "easy-to-open" or "EZO" package if he can be manually opened by pulling the top lid or separating the two webs, normally starting from an area like a comer or a tab of the package which has purposely not been sealed, without the use of scissors, knives or other cutting devices.

The easy-to-open packages of the prior art are based on three different mechanisms.

In the first one ("peelable easy opening"), the package is opened by separating the two parts at the seal interface. In the second mechanism ("adhesive failure") the opening of the package is achieved through an initial breakage through the thickness of one of the sealing layers followed by delamination of this layer from the underlying support or film. The third system is based on the "cohesive failure" mechanism, i.e. by internal rupture of an internal peealable layer that, during opening of the package, breaks along a plane parallel to the layer itself.

Regardless of the type of easy opening mechanism, it is desirable that the failure does not cause "angel hair"or strings of resin to form or remain between the layer and the substrate upon separation, which are visually unattractive to the end-user.

In an EZO package the seal should be sufficiently strong i.e. hermetic, to withstand the expected abuse during the packaging operation, distribution, and storage (leak-proof closure). The force required to pull a seal apart is called "seal strength" or "heat seal strength" which can be measured, for example, in accordance with ASTM F88-94. The desired seal strength varies according to specific end user applications.

For example for flexible packaging applications, the seal strength desired is generally in the range of 0.45-4.1 Kg per inch. Typical rigid packages have seal strength of 0.45-2.27 Kg per inch.

In addition, it is desirable that the sealable layer has a relatively low heat seal initiation temperature, in order to allow the equipment used to form the heat seals to run at relatively fast speeds, and a broad sealing window which could accommodate variability in process conditions, such as pressure and temperature.

It would be also advantageous to have packaging films which seal on different substrates. In fact, the bottom web or substrate of easy-open packages can be, for example, polyethylene (PE) or polypropylene (PP) based surfaces, depending on the packaging application and the desired performance attributes. In the absence of versatile sealing properties, packagers that use for instance both PE- surfaced substrates and PP-surfaced substrates for easy-open packaging must purchase at least two separate types of top film or lid stock depending on the composition of the substrate. Further, to meet this demand, film suppliers must be able to provide at least two types of compatible top film or lid stock to the packagers. This increases the amount of film inventory that the easy-open packager or film supplier must carry and also increases the complexity and cost of the manufacture of easy-open packaging.

Another highly desirable feature of heat sealable packaging films is a good sealability also under "contaminated" conditions, i.e. in case of sealing areas wet with drip or purge from the product, such as meat.

Further, in case of ready meals packages, namely of packages comprising food ready to be consumed after microwave/oven heating, the seal composition must be able to stand pasteurization, possible intermediate freezing and, finally, re-heating, without loosing its sealing properties thus assuring package hermeticity up to final opening by the consumer.

Additional desired characteristics for a heat sealable film include a low coefficient of friction and good optics. A low coefficient of friction ensures that the sealant layer can be processed smoothly and efficiently on fabrication and packaging equipment.

Good optics, i.e high gloss and low haze values, are important to give the final package an attractive appearance.

In order to allow visual inspection of the content of the final package - in case of moist products such as for example fresh meat - the film is also to be provided with anti-fog properties.

Additional characteristics include taste and odour performance, particularly relevant for food applications, and barrier or transmission properties. Good abuse resistance and toughness are also desirable.

In the art of packaging, there is still a need for heat sealable, antifog compositions, films and EZO packages characterized by having all the following properties:
- an optimal seal strength for leak-proof performances on different substrates, in particular upon PE and PP based material (hermeticity, high versatility)
- low seal initiation temperature and broad heat sealing window for higher flexibility in the packaging process conditions
- no stringiness or "angel hair" upon separation
- sealability also under "contaminated" conditions
- hermeticity and EZO after pasteurization treatments and re-heating,
- anti-fog effect
- good optics
- no bad smell
- low coefficient of friction
- barrier effect suitable for the intended application
- good abuse resistance and toughness

It has been discovered that the compositions, the films and the EZO packages of the present invention disclose all the above desired properties thus solving different technical problems encountered in this art of packaging.

### Summary of invention

It is thus a first object of the present invention an antifog seal composition comprising:
a) from 15 to 60% of polypropylene (PP)
b) from 5 to 50% of linear low density polyethylene (LLDPE)
c) from 15 to 60% of ethylene vinyl acetate (EVA), and
d) from 0.5 to 8% of an antifog agent

It is a second object of the present invention a multilayer packaging film comprising at least a first outer sealable layer, an internal barrier layer and a second outer layer, wherein said outer sealable layer comprises said antifog seal composition.

It is a third object of the present invention a laminate obtainable by laminating said film onto a supporting web.

It is a fourth object of the present invention an EZO package comprising a support, a product loaded onto said support and lid placed over said product and sealed onto a sealing area of said support thus closing the package, wherein said lid is a multilayer packaging film or laminate according to the present invention.

It is a fifth object of the present invention an EZO package comprising a flexible container obtainable by suitably folding and self-sealing the multilayer film or laminate according to the present invention and a product packaged therein.

It is a sixth object of the present invention the use of said film in EZO packaging.

### Description of embodiments

### DEFINITIONS

Unless otherwise stated all the percentages are meant to be percentages by weight.

With the term "polypropylene" (PP) an homopolymer or copolymer of propylene according to the following definitions is meant. Homopolymer: a polymer of propylene having a density higher then 0.890 g/cc, preferably higher then 0.895 g/cc and/or a melt flow index MFI from 0.5 to 15 g/10min (at 230°C and 2,16 kg), preferably from 1.0 to 10 g/10 min, more preferably from 2.5 to 7.0 g/10 min. Copolymers: random copolymer of propylene with ethylene or butene, having an ethylene or butene content not higher than 15 %, preferably not higher than 10 %, and having a density higher then 0.890 g/cc, preferably higher then 0.895 g/cc and/or a melt flow index MFI from 0.5 to 15 g/10min (at 230°C and 2,16 kg), preferably from 1.0 to 10 g/10 min, more preferably from 2.5 to 7.0 g/10 min; random terpolymer of propylene with ethylene and butene, in which the total amount of ethylene and butene comonomers is not higher than 18%, preferably not higher than 14% and/or the butene/ethylene ratio is higher than 2, preferably higher than 4, having a density higher then 0.890 g/cc, preferably higher then 0.895 g/cc and/or a melt flow index MFI from 0.5 to 15 g/10min (at 230°C and 2,16 kg), preferably from 1.0 to 10 g/10 min, more preferably from 2.5 to 7.0 g/10 min.

With the term "linear low density polyethylene" a Ziegler Natta or metallocene linear low density polyethylene (LLDPE) or a very low density polyethylene (VLDPE) copolymer of ethylene with butene and/or hexene and/or octene as comonomer, having a density from 0.895 to 0.935 g/cc, preferably from 0.900 to 0.925 g/cc, and more preferably from 0.905 to 0.920 and/or a melt flow index MFI (at 190°C - 2.16 kg) from 0.5 to 15 g /10 min, preferably from 1.0 to 10 g/10 min and more preferably from 2.0 to 7 g/10 min, is meant.

With the term "ethylene vinyl acetate" an ethylene vinyl acetate copolymer having a vinyl acetate content from 3 to 28 %, preferably from 5 to 18 %, more preferably from 9 to 14 % and/or a melt flow index MFI from 0.25 to 15 g/10 min, preferably from 0.4 to 8 g/10 min, more preferably from 0.5 to 3.0 g/10 min, is meant.

With the term antifog agent non-ionic surfactants like polyhydric alcohol fatty acid esters, higher fatty acid amines, higher fatty acid amides, polyoxyethylene ethers of higher fatty alcohols, polyoxyethylene glycols of higher fatty acids and ethylene oxide adducts of higher fatty acid, amines, or amides and their admixtures are meant.

Among these, preferred antifog agents are polyhydric alcohol fatty acid esters, especially sorbitan derivatives, polyoxyethylene glycols of higher fatty acids and glycerin fatty acid esters and their admixtures.

### DETAILED DESCRIPTION OF THE INVENTION

It is thus a first object of the present invention an antifog seal composition comprising:
a) from 15 to 60% of polypropylene (PP)
b) from 5 to 50% of linear low density polyethylene (LLDPE)
c) from 15 to 60% of ethylene vinyl acetate (EVA), and
d) from 0.5 to 8% of an antifog agent (AF)
preferably comprising
a) from 20 to 50% of polypropylene (PP)
b) from 10 to 40% of linear low density polyethylene (LLDPE)
c) from 20 to 50% of ethylene vinyl acetate (EVA) and,
d) from 1 to 5 % of an antifog agent (AF)
more preferably comprising
a) from 30 to 45% of polypropylene (PP)
b) from 15 to 35% of linear low density polyethylene (LLDPE)
c) from 30 to 45% of ethylene vinyl acetate (EVA) and,
d) from 1.5 to 3.5 % of an antifog agent (AF)
even more preferably comprising
a) from 35-40% of polypropylene (PP)
b) from 15- 30% of linear low density polyethylene (LLDPE)
c) from 35-40% of ethylene vinyl acetate (EVA) and,
d) from 1.8-3.0% of an antifog agent (AF)

In the composition object of the present invention the component a) (PP) is selected among the classes described under the above definitions section.

Particularly preferred PP are for example those commercialized by Borealis (trade name: RB307MO, Propylene/Ethylene Copolymer Ziegler/Natta, Density Standard (023°C) 0.950 g/cm3; Melt Flow Rate (230°C / 02.16 kg) 1.5 g/10 min), by Ineos (trade name ELTEX P KS359 Propylene/Ethylene/Butene Copolymer; Density 0.895 g/cm3; Melt Flow Rate (230°C / 02.16 kg) 5 g/10 min; Melting point 131 °C.

The content of PP in the composition of the present invention can be selected independently from the other components in the range from 15 to 60%, preferably form 20 to 50%, more preferably from 30 to 45%, even more preferably from 35 to 40%.

In the composition object of the present invention the component b) (LLDPE) is selected among the classes described under the above definitions section.

Particularly preferred LLDPE and Metallocene VLDPE-LLDPE are for example those commercialized by Exxon (Trade name: Exceed 2018 CA, density 0.902 g/cm3, and Melt Flow Rate 2.0 g/10 min), by Dow (Trade name: Affinity PL 1880G, density 0.902 g/cm3, Melt Flow Rate 1.1 g /10 min, Melting Point 99°C), by Ineos (Trade name: LL0 230 AA, Density: 0.902 g/cm3; Melt Flow Rate 3.1 g/10 min), by Dow (trade name DOWLEX 2045S, Ziegler/Natta Ethylene/Octene Copolymer Linear, Density 0.920 g/cm3, Melt Flow Rate (190°C / 02.16 kg) 1.00 g/10 min, Melting point 124.0 °C).

The content of LLDPE in the composition of the present invention can be selected independently from the other components in the range from 5-50%, preferably form 10-40%, more preferably from 15-35%, even more preferably from 15- 30%,

In the composition object of the present invention the component c) (EVA) is selected among the classes described under the above definitions section.

Particularly preferred EVA are for example those commercialized by Exxon (trade name: ESCORENE ULTRA FL00112, Ethylene/Vinyl Acetate Copolymer; Comonomer content Vinyl Acetate 12 % Density 0.932 g/cm3; Melt Flow Rate (190°C / 02.16 kg) 0.50 g/10 min, Melting point 93 ° C or trade name: ESCORENE ULTRA FL00309, Ethylene/Vinyl Acetate Comonomer content Vinyl Acetate 9.4 % Density 0.928 g/cm3 Melting point 96 °C), by Arkema (trade name: EVATANE 28-03 , Ethylene/Vinyl Acetate Copolymer Comonomer content Vinyl Acetate 27 % Density 0.95 g/cm3, Melt Flow Rate (190°C / 02.16 kg) 4 g/10 min, Melting point 72 °C).

The content of EVA in the composition of the present invention can be selected independently from the other components in the range from 15 to 60%, preferably form 20 to 50%, more preferably from 30 to 45%, even more preferably from 35 to 40%.

In the composition object of the present invention the component d) (AF) is selected among the classes described under the above definitions section.

In particular suitable antifog agents fall into classes such as esters of aliphatic alcohols, polyethers, polyhydric alcohols, esters of polyhydric aliphatic alcohols, polyethoxylated aromatic alcohols, nonionic ethoxylates, polyethoxylated higher fatty acid esters, amines, higher fatty acid amides, polyoxyethylene ethers of higher fatty alcohols, ethylene oxide adducts of higher fatty acid amines or amides and hydrophilic fatty acid esters.

Preferred antifog agents include polyoxyethylene sorbitan monostearate, polyoxyethylene sorbitan monolaurate, polyoxyethylene sorbitan monooleate, polyoxyethylene monopalmitate, polyoxyethylene sorbitan tristearate, polyoxyethylene sorbitan trioleate, poly(oxypropylene), polyethylene glycol monolaurate, polyethoxylated fatty alcohols, polyethoxylated 4-nonylphenol, polyhydric alcohol, propylene triol, propylene glycol, ethylene diol, glycerin fatty acid esters, mono- and/or diglycerides such as glycerol mono- and dioleate, glyceryl stearate, monophenyl polyethoxylate, sorbitan monolaurate and their admixtures.

The content of the AF agent in the composition of the present invention can be selected independently from the other components in the range from 0.5-8% , preferably form 1-5%, more preferably from 1.5-3.5%, even more preferably from 1.8-3.0%.

The antifog seal composition of the present invention can be manufactured through conventional extrusion compounding systems by feeding the mixture of resins through the extruder (single or tween screw) where the resins are melted and by adding, with appropriate controlled system, the different additives that are in this way incorporated into the final composition. The resulting melt is then conveyed to the extrusion die which defines the shape and the size of the melt, which is then cooled by air or water and the final product is obtained; if an intermediate step is necessary, the molten strand or rim composition is cooled and cut into pellets.

Alternatively, it is possible to prepare the so called "masterbatches" where the additives are added to one or more resins at higher concentration, and the final product will then be used at film extrusion in appropriate quantity to provide the desired final percentage of antifog or other additives.

The composition object of the present invention used as a sealable layer confer optimal sealing, antifog and optical properties to the film further object of the present invention.

It is a second object of the present invention a multilayer packaging film comprising at least a first outer sealable layer, an internal barrier layer and a second outer layer, wherein said outer sealable layer comprises said antifog seal composition.

The present multilayer film has generally a thickness between 15 and 100 micrometer, preferably between 25 and 50 micrometer.

The film may also include one or more bulk layers, preferably placed in between the barrier and the second outer layer.

Exemplary polymers used in bulk layers include ethylene homo- and co-polymers, propylene homo- and co-polymers, ethylene/unsaturated acid copolymers, ethylene/unsaturated ester copolymers, polyamides, polyesters, and ionomers.

Preferably the film of the present invention does not comprise additional bulk layers.

The multilayer film may also include one or more adhesive or tie layers to provide increased adherence between the other layers.

Exemplary polymers used in adhesive layers include chemically modified ethylene polymers for example, ethylene/unsaturated ester copolymers, such as alkyl acrylates or methacrylates, graft copolymers of maleic acid or anhydride onto ethylene/vinyl acetate copolymers, graft copolymers of fused ring carboxylic anhydrides onto polyethylene, resin mixtures of these and mixtures with ethylene homo- or copolymers.

Preferably the film of the present invention comprises two tie layers which directly adhere to the internal barrier layer.

The film of the present invention may include from 3 to 9 layers, preferably from 3 to 7 layers, but more preferably consists of 5 layers according to the sequence: first outer sealable/ tie / barrier / tie / second outer.

The first outer sealable layer of the present film - the food contact layer - comprises the composition according to the present invention, preferably it consists of said composition.

The outer sealable layer of the present film has generally a thickness from 2 to 25 micrometer, preferably from 8 to 20 micrometer

The gas barrier layer may include one or more polymers having low permeability to oxygen, such as ethylene vinyl alcohol copolymer (EVOH), polyvinylidene chloride (PVDC), polyamides, or polyesters, preferably EVOH.

The barrier layer of the present film has generally a thickness from 2 to 15 microns , preferably from 2 to 5 microns.

The second outer layer of the present film generally comprises ethylene homo- and co-polymers, propylene homo- and co-polymers, ethylene/unsaturated acid copolymers, ethylene/unsaturated ester copolymers, polyamides, polyesters, and ionomers, EVA, their blends or their maleic anhydride modified derivatives, especially when a hot lamination process step follows the coextrusion step.

The second outer layer of the present film has generally a thickness from 4 to 20 micrometer, preferably from 5 to 10 micrometer.

One or more of the layers of the film of the present invention may contain any of the additives conventionally employed in the manufacture of polymeric films. Thus, agents such as pigments, lubricants, anti-oxidants, radical scavengers, UV absorbers, thermal stabilisers, anti-blocking agents, surface active agents, slip aids, optical brighteners, gloss improvers, viscosity modifiers may be incorporated as appropriate. In particular, to improve the processing of the film in high speed packaging equipment slip and/or anti-blocking agents may be added to one or both of the surface layers

The present multilayer film is preferably a laminating film with lamination (second outer layer) and heat-sealable (first outer layer) sides, and having excellent antifogging properties. In fact the film according to the present invention is suitable in particular for packaging moist, oxygen-sensitive products such as fresh meat for example, which are presented chilled to the purchaser. In such an instance, suitable packaging, using the laminating film according to the invention ensures optical package properties which are not disturbed by condensation on the inside.

The multilayer film according to the present invention, when bonded to a supporting web to give a laminate, is preferably pre-treated on the lamination side to achieve increased surface tension, for example pre-treated by a corona treatment.

The multilayer film may be produced by a variety of processes known in the art, including extrusion (e.g., blown-film extrusion, coextrusion, extrusion coating, flat-film extrusion, and lamination), casting, and adhesive lamination. A combination of these processes may also be employed, but preferably hot blown coextrusion, followed by air cooling is used. The present films are preferably non-oriented, non-shrinkable films. However in case of oriented, heat shrinkable or heat-set films, the manufacturing process might include an additional cross-linking step according to the art.

The supporting web may be a monolayer film of suitable plastic materials known in the art, preferably being biaxially oriented polypropylene (BOPP) or, more preferably, biaxially oriented polyethylene terephthalate (BOPET) webs, such those available on the market under the trade name of Mylar 8130 or Nuroll PK.

Generally the supporting web has a thickness from 9 to 36 micrometer, preferably from 10 to 25 micrometer. The supporting web may be optionally corona or chemically treated for printing.

The supporting web and the multilayer laminating film, according to the present invention, are typically prefabricated separately and bonded together using conventional techniques such as glue laminating or hot lamination techniques.

Generally the coextruded multilayer film is glue laminated onto bioriented PET film.

Glue lamination could be solvent-less or solvent based as well known in the art. Generally the glue thickness is between 2 and 4 micrormeter.

It is a third object of the present invention a laminate obtainable by laminating said film onto a supporting web. The laminate can be manufactured according to conventional methods known in the art as described above.

It is a fourth object of the present invention an EZO package comprising a support, a product loaded onto said support and lid placed over said product and sealed onto a sealing area of said support thus closing the package, wherein said lid is a multilayer packaging film or laminate according to the present invention.

The support can be any rigid container suitable for packaging such as a tray, a bowl, a dish etc.., provided that it has a sealing area suitable for being sealed to the outer sealable layer of the film or laminate of the present invention. The films and laminates of the present invention are suitable to be sealed onto different sealing materials, such as polyolefins, ionomers, EVA, acrylic derivatives, but preferably they are sealed onto PP and/or PE based sealing surfaces.

Preferred containers are rigid solid monocomponent PP trays or trays made of other rigid plastic materials, i.e PET trays, carton or aluminum laminated with a PE or PP based sealant liner. Suitable containers can be pre-made or thermoformed in-line.

The EZO feature of the package of the present invention is due to a delamination between the first outer sealable layer and the barrier layer of the present film which occurs when a non sealed portion of the lid closing the package is grasped and manually pulled away from the support. Said EZO performance is also present with packages without a pulling tab. The opening is particularly easy and soft, without tears and fringes and it leaves a continuous, smooth, transparent surface all along the sealing area which is appealing to the consumer.

It is a fifth object of the present invention an EZO package comprising a flexible container obtainable by suitably folding and self-sealing the multilayer film or laminate according to the present invention and a product packaged therein.

In these applications the present film is sealed onto itself in a manner known in the art providing bags, pouches and other kinds of flexible containers with EZO and antifog features.

It is a sixth object of the present invention the use of said film in EZO packaging, preferably in tray lidding applications. Preferably the present invention is applied to fresh meat and ready meals packaging, particularly for pasteurization / heating applications.

With the purpose to better explain the present invention and without limiting its scope, the following examples will now be given.

### Experimental part

The compositions are expressed in percentages by weight, the complement to one hundred, if not expressly indicated, being of minor process aids (antiblock, slip agents etc) whose use is generally well known in the art.

The resins used for manufacturing the films described in the following examples are:
PP1: Propylene/Ethylene Copolymer Ziegler-Natta commercialized by Borealis (trade name: RB307MO, Propylene/Ethylene Copolymer Ziegler/Natta, Density Standard (023°C) 0.950 g/cm3; Melt Flow Rate (230 °C / 02.16 kg) 1.5 g/10 min)
PP2: Propylene/Ethylene/Butene Copolymer commercialized by Ineos (trade name ELTEX P KS359; Density 0.895 g/cm3; Melt Flow Rate (230 °C / 02.16 kg) 5 g/10 min; Melting point 131 °C)
PP4: Propylene/Ethylene Copolymer Ziegler/Natta commercialized by Lyondell Basell Industries (Trade name Moplen rP 241 H, Density 0.9 g/cm3 Melt Flow Rate (230°C / 02.16 kg) 1.8 g/10 min)
PP5: Polypropylene, Propylene/Ethylene Copolymer Single Site, sold by Dow (Trade name: VERSIFY 2200 PLASTOMER) Density 0.876 g/cm3 Melt Flow Rate (230°C / 02.16 kg) 2.0 g/10 min
EVA1: Ethylene/Vinyl Acetate Copolymer sold by Exxon Mobile (trade name: ESCORENE ULTRA FL00112, Comonomer content Vinyl Acetate 12 % Density 0.932 g/cm3; Melt Flow Rate (190°C / 02.16 kg) 0.50 g/10 min, Melting point 93 °C)
EVA2: Ethylene/Vinyl Acetate copolymer sold by Exxon Mobile (trade name: ESCORENE ULTRA FL00309, Comonomer content Vinyl Acetate 9.4 % Density 0.928 g/cm3 Melting point 96 °C)
EVA3: , Ethylene/Vinyl Acetate Copolymer sold by Arkema (trade name: EVATANE 28-03 Comonomer content Vinyl Acetate 27 % Density 0.95 g/cm3, Melt Flow Rate (190°C / 02.16 kg) 4 g/10 min, Melting point 72 ° C)
LLDPE1: Linear Low Density Ethylene/Octene Copolymer sold by Ineos (Trade name: LLO 230 AA, Density: 0.902 g/cm3; Melt Flow Rate 3.1 g/10 min)
LLDPE2: Linear Low Density Ethylene/Octene Copolymer Branched, Single Site sold by Dow (Trade name: AFFINITY PL 1880G, Density: 0.902 g/cm3; Melt Flow Rate (190°C / 02.16 kg) 1.1 g/10 min; Melting point: 99°C; Vicat softening point: 86 °C)
LLDPE3: Ziegler/Natta Ethylene/Octene Copolymer Linear sold by Dow (trade name DOWLEX 2045S, Density 0.920 g/cm3, Melt Flow Rate (190° C / 02.16 kg) 1.00 g/10 min, Melting point 124.0 °C),
EVOH1: Ethylene/Vinyl Alcohol Copolymer sold by Nippon Gohsei (trade name: SOARNOL ET3803, comonomer content Ethylene 38 %; Crystallization point 58 °C; density 1.17 g/cm3; Melt Flow Rate (210°C / 02.16 kg) 3.20 g/10 min; Melting point 173 °C)
EVOH2: Ethylene/Vinyl Alcohol Copolymer Comonomer sold by Arkema (trade name: EVASIN EV3801F, content Ethylene 38 %, Crystallization point 155 °C Density 1.17 g/cm3 Glass Transition 64 °C Melt Flow Rate (190°C / 02.16 kg) 1.80 g/10 min, Melting point 175°C)
TIE: Maleic Anhydride -Modified Polyethylene, Linear Low Density sold by Mitsui (Trade name: ADMER NF518E, Density 0.91g/cm3; Melt Flow Rate (190°C / 02.16 kg) 3.1 g/10 min, Melting point 118°C)
LDPE: 1:1 admixture of LDPE1 Polyethylene Low Density Homopolymer sold by Dow (Trade name: LDPE 310E, Density 0.9235 g/cm3; Melt Flow Rate (190°C / 02.16 kg) 0.75 g/10 min and LDPE2)Polyethylene Low Density Homopolymer sold by Dow (Trade name Density LDPE 312, Density 0.923 g/cm3, Melt Flow Rate (190°C / 02.16 kg) 0.75 g/10 min)
VLDPE: Very Low Density Ethylene/Octene Copolymer Branched, Single Site sold by Dow (Trade name: AFFINITY PL 1850G, Comonomer content Octene 12 % Density 0.9020 g/cm3, Melt Flow Rate (190°C / 02.16 kg) 3.00 g/10 min, Melting point 97.0 °C)
MDPE: Medium Density Linear Ethylene/Octene Copolymer, Ziegler/Natta, sold by DOW (Trade name: DOWLEX SC 2108G, Density 0.935 g/cm3, Melt Flow Rate (190°C / 02.16 kg) 2.6 g/10 min, Melting point 128 °C)
Antifog agents: suitable antifog agents, also incorporated in masterbatches are for example those sold by Schulmann, Ampacet and Poly One.

### Example 1

A heat-sealable multilayer film (F1) with the structure (35% PP1 +35% EVA1+26.5% LLDPE1+ 1.8 % PEG sorbitan monooleate +1.2% PEG monolaurate + 0.05% Si02) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L1) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P1-PP and P1-PE respectively.

### Example 2

A heat-sealable multilayer film (F2) with the structure (35% PP2+35% EVA1+26.5% LLDPE1+ 1.8 % PEG sorbitan monooleate +1.2% PEG monolaurate + 0.05% SiO2) / tie / EVOH / tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L2) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P2-PP and P2-PE respectively.

### Example 3

A heat-sealable multilayer film (F3) with the structure (35% PP1+35% EVA1+26.5% LLDPE1+ 1.8 % PEG sorbitan monooleate +1.2% PEG monolaurate + 0.05% SiO2) / tie / EVOH1 /tie /LDPE corona treated with the layer thicknesses of 16/3/3/3/15 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L3) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P3-PP and P3-PE respectively.

### Example 4

A heat-sealable multilayer film (F4) with the structure (40% PP1+40% EVA1+17.8% LLDPE1+ 1.2 % PEG sorbitan monooleate +0.8% PEG monolaurate + 0.03% SiO2) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L4) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P4-PP and P4-PE respectively.

### Example 5

A heat-sealable multilayer film (F5) with the structure (35% PP1+35% EVA1+26.5% LLDPE3 + 1.2% polyethoxylated Lauryl Alcohol +0.6 % PEG monolaurate + 0.21 % SiO2) / tie / EVOH1 /tie /LDPE corona treated, with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L5) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P5-PP and P5-PE respectively.

### Example 6

A heat-sealable multilayer film (F1) with the structure (35% PP4+35% EVA1+26.5% LLDPE1+ 1.8 % PEG sorbitan monooleate +1.2% PEG monolaurate + 0.05% SiO2) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L6) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P6-PP and P6-PE respectively.

### Example 7

A heat-sealable multilayer film (F7) with the structure (35% PP1+35% EVA3+26.5% LLDPE1+ 1.8 % PEG sorbitan monooleate +1.2% PEG monolaurate + 0.05% SiO2) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micronmeter (Mylar 8130, DuPont) using a conventional polyurethane laminating adhesive.

The laminate (L7) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P7-PP and P7-PE respectively.

### Example 8

A heat-sealable multilayer film (F8) with the structure (35% PP1+35% EVA2+26.5% LLDPE1+ 1.8 % PEG sorbitan monooleate +1.2% PEG monolaurate + 0.05% SiO2) / tie / EVOH2 /tie /LDPE corona treated with the layer thicknesses of 16/3/3/3/15 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L8) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P8-PP and P8-PE respectively.

### Comparative example 1

A heat-sealable multilayer film (F1-C) with the structure (35% PP5+35% VLDPE + 26.5% LLDPE1+ 1.8 % PEG sorbitan monooleate +1.2% PEG monolaurate + 0.05% SiO2) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L1-C) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P1-PP-C and P1-PE-C respectively.

### Comparative example 2

A heat-sealable multilayer film (F2-C) with the structure (35% PP2+35% LLDPE2 + 26.5% LLDPE1+ 1.8 % PEG sorbitan monooleate +1.2% PEG monolaurate + 0.05% SiO2) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L2-C) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P2-PP-C and P2-PE-C respectively.

### Comparative example 3

A heat-sealable multilayer film (F3-C) with the structure (50% PP1+ 47.2% LLDPE2 + 2% polyethoxylated Lauryl Alcohol + 1 % glycerol fatty acid esters + 0.35% SiO2) / tie / EVOH /tie /LDPE corona treated with the layer thicknesses of 16/3/3/3/15 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L3-C) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P3-PP-C and P3-PE-C respectively.

### Comparative example 4

A heat-sealable multilayer film (F4-C) with the structure (50% PP1+47.2% LLDPE2+ 2% polyethoxylated Lauryl Alcohol + 1 % glycerol fatty acid esters + 0.35% SiO2) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L4-C) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P4-PP-C and P4-PE-C respectively.

### Comparative example 5

A heat-sealable multilayer film (F5-C) with the structure (24% MDPE+25% LLDPE2+ 46.5% LLDPE3 + 2% polyethoxylated Lauryl Alcohol + 1 % PEG monolaurate + 0.35% SiO2) / tie / EVOH1 /tie /LDPE corona treated with the layer thicknesses of 10/3/3/3/6 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L5-C) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P5-PP-C and P5-PE-C respectively.

### Comparative example 6

A heat-sealable multilayer film (F6-C) with the structure (35% PP2+35% LLDPE2+ 26.5% LLDPE1 + 1.8 % PEG sorbitan monooleate +1.2% PEG monolaurate + 0.35% SiO2) / tie / EVOH1 /tie /LDPE corona treated with the layer thicknesses of 16/3/3/3/12 micrometer was produced by a hot blown coextrusion, followed by air cooling and laminated to commercially available, monolayer biaxially oriented polyester film of 12 micrometer (Mylar 8130, DuPont) using a conventional polyurethane laminating adhesive.

The laminate (L6-C) was used in a conventional tray lidding machine as a top lid for manufacturing hermetic EZO packages according to the present invention. The laminate was sealed on rectangular trays having either a PP-based sealing area (mono-component PP rigid trays) or a PE-based sealing area (PET rigid trays with an internal PE based liner) thus providing the packages P6-PP-C and P6-PE-C respectively.

The multilayer films according to the invention (F1-F8) and the comparative films (F1-C - F6-C) were measured in relation to the following properties and with the following test methods:

Antifog according to the internal method described hereinafter:

The antifog effectiveness of an antifog film was evaluated by visually comparing a sample film, which had been exposed to controlled fogging conditions. The controlled fogging conditions are as follows: film samples are heat-sealed to the periphery of trays containing about 150 ml of water at a temperature of about 15°C. The trays are then placed in a refrigerator at a temperature of 2 to 4°C and the formation of fog is monitored as well as its possible disappearance after 24 hours. The results were assessed on a scale from 1 to 5 with the following meanings: 5=excellent, the bottom of the tray is clearly visible through the film and there are no drops of water on the film itself; 4=good, the bottom of the tray is clearly visible but a few droplets of water are present in a limited quantity on the surface of the film; 3=acceptable, the bottom of the tray can be seen in spite of the presence of a certain number of droplets on the surface of the film; 2=poor, it is difficult to see the bottom of the tray due to the considerable number of water droplets on the surface of the film; 1=very poor, it is impossible to see the bottom of the tray.
Tensile strength and elongation according to ASTMD882
Coefficient of friction according to ASTMD1894
Oxygen transmission rate according to ASTMD3985
Gloss according to ASTMD2457
Haze according to ASTMD1003

The results of the evaluation of the multilayer films (F1-F8) and the comparative films (F1-C-F6-C) are summarized in Table 1.

**Table 1**

| examples | Thickness micronmeter | AF | Tensile strength LD/TD | Elongation LD/TD | Friction | OTR cm³/m² /24h | Gloss | Haze % |
|---|---|---|---|---|---|---|---|---|
| F1 | 25 | 5 | | | | | 60.3 | 19.2 |
| F2 | 25 | 5 | | | 0,29 | 4.6 | 55 | 16 |
| F3 | 40 | 4.5 | 240/175 | 230/540 | 0.33 | 5.5 | 50 | 16 |
| F4 | 25 | 4.5 | 340/170 | 190/545 | 0.36 | 5.2 | 40 | 22 |
| F5 | 25 | 5 | 340/195 | 160/385 | 0.3 | 5.1 | 75 | 17 |
| F6 | 25 | 5 | 330/180 | 170/350 | 0.31 | 5.4 | 65 | 19 |
| F7 | 25 | 5 | 270/170 | 150/270 | 0.37 | 5.1 | 37 | 34 |
| F8 | 40 | 4.5 | 235/140 | 220/280 | 0.33 | 3.3 | 58 | 24 |
| F1-C | 25 | 3.5 | | | | | 63.2 | 18.8 |
| F2-C | 25 | 5 | 260/175 | 160/440 | 0.26 | 3.6 | 82 | 19 |
| F-3C | 40 | 5 | | | | | 80.8 | 12.6 |
| F4-C | 25 | 5 | | | | | 80.8 | 12.6 |
| F5-C | 25 | 5 | | | | | 83.4 | 16.6 |
| F6-C | 37 | 5 | 275/175 | 160/400 | 0.29 | 5.2 | 80 | 15 |

The films of the present invention disclose good performance in terms of AF, mechanics, optics and barrier effect.

The results of the evaluation of the laminates (L3, L8) and the comparative laminates (L3-C, L4-C) are summarized in Table 2.

Antifog properties were evaluated after lamination, winding and partial aging at 12, 18, 24, 36, 48 and 66 hours.

**Table 2**

| examples | Thickness micrometer | AF at 2, 18, 24, 36, 48, 66 hours | Gloss | Haze % |
|---|---|---|---|---|
| L3 | 52 | 3.5, 3.5, 3.5, 3.5, 3.5, 3.5-4, 3-5 | 121. 0 | 10.3 |
| L8 | 52 | 3.5, 3.5, 3.5, 3.5, 3.5, 3.5, 3-5 | 119. 0 | 15.3 |
| L2-C | 37 | 3.5, 3.5, 3.5, 3.5-4,4, 3-5 | 128. 6 | 8.0 |
| L4-C | 37 | 3.5, 3.5, 3.5, 3.5, 4, 3-3.5 | 132. 8 | 6.2 |

The laminates of the present invention and the comparative laminates manufactured as described above were subjected to evaluation for Heat Seal Strength according to the following internal method.

The method evaluates the maximum tensile load per unit width, expressed in g/25 mm, required to break the seal of a test specimen (5 samples for each condition).

Five laminate samples are cut across the roll width for each sealing condition to be tested.

Each sample is sealed in transverse direction (TD) with a sealant partner base PP or PE. The seals are made with hot bar sealer 350 mm long, with a rectangular cross-section and a sealing base 10 mm wide, sealing time : 1.0 sec, Temperatures from 140 to 200 °C. The tensile load is measured with an Instron tensile tester equipped with Load cell type CM (1 - 50 kg), Crosshead speed: 30 cm/min, Initial jaw separation: 5 cm.

The results are reported in the following table 3.

**Table 3**

| L2-C on PE | L2-C on PP | L1 on PE | L1 on PP | L4-C on PE | L4-C on PP |
|---|---|---|---|---|---|
| 4300 | 3543 | 4351 | 2150 | 4087 | 2699 |
| 4397 | 1601 | 4448 | 1702 | 4270 | 2346 |
| 4305 | 3238 | 4341 | 1885 | 4321 | 2437 |
| 4178 | 2862 | 4341 | 1394 | 4620 | 1592 |
| 4214 | 3904 | 4600 | 1593 | 4316 | 4961 |
| 4112 | 1185 | 4041 | 3939 | 4448 | 2348 |
| 4549 | 4859 | 3644 | 2550 | 4351 | 3116 |
| 4397 | 3182 | 4595 | 1733 | 5240 | 1572 |
| 2740 | 2183 | 4809 | 2295 | 4219 | 1395 |
| 4437 | 3218 | 4153 | 1386 | 2552 | 4127 |
| 2770 | 4310 | 2308 | 1433 | 3731 | 2300 |
| 4341 | 3294 | 4519 | 1857 | 4275 | 2609 |
| 4915 | 1788 | 4727 | 2114 | 4778 | 2613 |
| 4834 | 3639 | 4270 | 2545 | 4112 | 1775 |
| 4483 | 2800 | 4468 | 3182 | 4026 | 2618 |
| 4890 | 2880 | 4702 | 1403 | 3899 | 1803 |

The laminates according to the invention (L) and the comparative laminates (L-C) were used in a conventional tray lidding machine as top lid for manufacturing hermetic EZO packages according to the present invention. They were sealed on rectangular trays having either a PP-based sealing area (mono-component PP rigid trays) or a PE-based sealing area (PET rigid trays with an internal PE based liner) thus providing the hermetic EZO packages of the present invention.

The packages in which the laminates were sealed to PP trays were manufactured according to the following specifications:

Sealpac A7 tray lidding machine, tooling 1419 inside cut, seal temperatures - see table 4, seal time: 1 sec, gas 850 mbar, vacuum 200 mbar; trays mono PP (from Bartling)

The packages in which the laminates were sealed to PE trays were manufactured according to the following specifications:

Mondini E380 tray lidding machine, tooling 1520 outside cut, machine working pressure: 5 bars, seal temperatures - see table 3, seal time: 1 sec, gas 900 mbar, vacuum 200 mbar; PET trays, liner PE. The packages were manufactured both under clean and under contaminated conditions (sealing area wet with drip form meat).

Hermeticity of the seals was evaluated according to this internal test, on 100 trays of each package: the packages were introduced in a closed water tank.

Vacuum was created in the headspace of the water tank and the value of the pressure (bar) inside the tank when bubbles start to escape the closed packages was recorded.

The results of the evaluation of the present packages (P) and the comparative packages (P-C) are summarized in Table 4.

**Table 4**

| Package | Hermeticity PP trays clean | Hermeticity PP trays contaminated beef | Hermeticity PE trays clean | Hermeticity PE trays contam beef |
|---|---|---|---|---|
| P1 | | | 0% -0.51 bar (at 150°C), 0% -0.53 bar (at 170°C) | 2% -0.57 bar (at 150°C) |
| P2 | 0% -0.41 bar (at 180°C), 0% -0.39 bar (at 200°C) | --- | | |
| P4 | 0% -0.39 bar (at 180°C), 0% -0.42 bar (at 200°C) | 0%, -0.36 bar (at 190°C) | | |
| P3 | 0% -0.42 bar (at 180°C), 0% -0.42 bar (at 200°C) | 0%, -0.42 bar (at 190°C) | | |
| P6 | 0% -0.38 bar (at 180°C), 0% -0.43 bar (at 200°C) | 3%, -0.35 bar (at 200°C) | | |
| P8 | 0% -0.38 bar (at 180°C), 0% -0.38 bar (at 200°C) | 3.6%, -0.36 bar (at 190°C) | | |
| P5-C | | | 0% -0.49 bar (at 150°C), 0% -0.67 bar (at 170°C) | 0% -0.57 bar (at 150°C) |
| P6-C | 0% -0.41 bar (at 180°C), 0% -0.43 bar (at 200°C) | 0%, -0.39 bar (at 190°C) | | |

Hermeticity of the present packages is comparable to the references, both under clean and contaminated conditions. However, only the packages of the present invention show EZO performance.

The packages manufactured as described above (seal T: 200°C, time 1 sec) were subjected to evaluation for easy-opening according to the following method: subjective judgment by 4 persons after 3 days from packing, on packs kept at 4°C. No facilitating tab available. The results are summarized in table 5.

**Table 5**

| Example | Score on EZO | Notes |
|---|---|---|
| P1-PE | Very good | Smooth opening, lid remains intact after separation (no fringes) |
| P1-PP | Very good | Smooth opening, lid remains intact after separation (no fringes) |
| P2-PP | Good | Smooth opening, lid tearing after opening |
| P3-PP | Very good | Smooth opening, lid remains intact after separation (no fringes) |
| P8-PP | Very good | Smooth opening, lid remains intact after separation (no fringes) |
| P2-C-PE | Bad | Opening only with breaking, fringes |
| P2-C-PP | Bad | Opening only with breaking, fringes |
| P3-C-PE | Bad | Opening only with breaking, fringes |
| P3-C-PP | Bad | Opening only with breaking, fringes |

The packages according to the present inventions are also structurally capable of withstanding exposure to pasteurising conditions while containing a food product.

In particular L3 was used as top lid in the manufacture of a package P3-PP (PP clear monotray from Bartling), containing mashed potatoes, as described above.

The package was submitted to pasteurization (98°C-2h): the seal was tight, with no leakers and the package hermetic. After pasteurization and 2 days at 4°C (the package was not EZO openable under cold conditions, but opened only with tearings), the package was re-heated in a microwave. After re-heating, the package showed a strong seal (hermeticity) but with EZO openability even in the absence of a pull tab.

These properties are particularly advantageous for Ready meals applications.

## Claims

1. An antifog seal composition comprising: a) from 15 to 60% of polypropylene (PP) b) from 5 to 50% of linear low density polyethylene (LLDPE) c) from 15 to 60% of ethylene vinyl acetate (EVA), and d) from 0.5 to 8% of an antifog agent (AF).

2. The composition of claim 1 comprising a) from 20 to 50% of polypropylene (PP) b) from 10 to 40% of linear low density polyethylene (LLDPE) c) from 20 to 50% of ethylene vinyl acetate (EVA) and, d) from 1 to 5 % of an antifog agent (AF).

3. The composition of claim 1 or 2 comprising: a) from 30 to 45% of polypropylene (PP) b) from 15 to 35% of linear low density polyethylene (LLDPE) c) from 30 to 45% of ethylene vinyl acetate (EVA) and, d) from 1.5 to 3.5 % of an antifog agent (AF).

4. A multilayer packaging film comprising at least a first outer sealable layer, an internal barrier layer and a second outer layer, wherein said outer sealable layer comprises an antifog seal composition according to claims 1 to 3.

5. The multilayer packaging film according to claim 4 comprising from 3 to 9 layers, preferably from 3 to 7 layers, more preferably consisting of 5 layers.

6. A laminate obtainable by laminating a multilayer packaging film of claims 5 to 6 onto a supporting web.

7. The laminate of claim 6 wherein said support web is a biaxially oriented polyester film.

8. An EZO package comprising a support, a product loaded onto said support and lid placed over said product and sealed onto a sealing area of said support thus closing the package, wherein said lid is a multilayer packaging film or laminate according to claims 4 or 5 or 6 or 7.

9. The EZO package according to claim 8 wherein said support has a PP and/or PE based sealing surface.

10. An EZO package comprising a flexible container obtainable by suitably folding and self-sealing the multilayer film or laminate according to claims 4 or 5 or 6 or 7 and a product packaged therein

11. The EZO package according to claim 10 in which said flexible container is a pouch or a bag.

12. Use of a film or a laminate according to claims 4 or 5 or 6 or 7 in EZO packaging, preferably in tray lidding applications.

13. Use of a film or a laminate according to claims 4 or 5 or 6 or 7 for packaging fresh meat.

14. Use of a film or a laminate according to claims 4 or 5 or 6 or 7 for packaging ready meals.

15. Use according to claim 14 for pasteurizable and re-heatable ready meals.

## Patentansprüche

1. Beschlagschutzsiegelungsszusammensetzung, umfassend: a) 15 bis 60 % Polypropylen (PP), b) 5 bis 50 % lineares Polyethylen geringer Dichte (LLDPE), c) 15 bis 60 % Ethylenvinylacetat (EVA) und d) 0,5 bis 8 % Beschlagschutzmittel (AF).

2. Zusammensetzung nach Anspruch 1, umfassend a) 20 bis 50 % Polypropylen (PP), b) 10 bis 40 % lineares Polyethylen geringer Dichte (LLDPE), c) 20 bis 50 % Ethylenvinylacetat (EVA) und d) 1 bis 5 % Beschlagschutzmittel (AF).

3. Zusammensetzung nach Anspruch 1 oder 2, umfassend a) 30 bis 45 % Polypropylen (PP), b) 15 bis 35 % lineares Polyethylen geringer Dichte (LLDPE), c) 30 bis 45 % Ethylenvinylacetat (EVA) und d) 1,5 bis 3,5 % Beschlagschutzmittel (AF).

4. Mehrschichtige Verpackungsfolie, umfassend wenigstens eine erste äußere siegelfähige Schicht, eine interne Barriereschicht und eine zweite äußere Schicht, wobei die äußere siegelfähige Schicht eine Beschlagschutzsiegelungsszusammensetzung nach den Ansprüchen 1 bis 3 umfasst.

5. Mehrschichtige Verpackungsfolie nach Anspruch 4, umfassend 3 bis 9 Schichten, vorzugsweise 3 bis 7 Schichten, mehr bevorzugt bestehend aus 5 Schichten.

6. Laminat, das durch Laminieren einer mehrschichtigen Verpackungsfolie der Ansprüche 5 bis 6 auf einer Trägerbahn erlangt werden kann.

7. Laminat nach Anspruch 6, wobei die Trägerbahn eine biaxial orientierte Polyesterfolie ist.

8. EZO-Verpackung, umfassend einen Träger, ein Produkt, das auf den Träger geladen ist, und einen Deckel, der über das Produkt gesetzt ist und an einen Siegelungsbereich des Trägers gesiegelt ist, wodurch die Verpackung verschlossen ist, wobei der Deckel eine mehrschichtige Verpackungsfolie oder ein Laminat nach den Ansprüchen 4 oder 5 oder 6 oder 7 ist.

9. EZO-Verpackung nach Anspruch 8, wobei der Träger eine auf PP und/oder PE basierende Siegelungsfläche aufweist.

10. EZO-Verpackung, umfassend einen flexiblen Behälter, der durch geeignetes Falzen und Selbstsiegeln der mehrschichtigen Folie oder des Laminats nach den Ansprüchen 4 oder 5 oder 6 oder 7 erlangt wird, und ein darin verpacktes Produkt.

11. EZO-Verpackung nach Anspruch 10, wobei der flexible Behälter ein Beutel oder eine Tasche ist.

12. Verwendung einer Folie oder eines Laminats nach den Ansprüchen 4 oder 5 oder 6 oder 7 zur EZO-Verpackung, vorzugsweise in Schalendeckelungsanwendungen.

13. Verwendung einer Folie oder eines Laminats nach den Ansprüchen 4 oder 5 oder 6 oder 7 zum Verpacken von frischem Fleisch.

14. Verwendung einer Folie oder eines Laminats nach den Ansprüchen 4 oder 5 oder 6 oder 7 zum Verpacken von Fertiggerichten.

15. Verwendung nach Anspruch 14 für pasteurisierbare oder wieder aufwärmbare Fertiggerichte.

## Revendications

1. Composition de scellement anti-buée comprenant :
a) de 15 to 60% de polypropylène (PP)
b) de 5 à 50% de polyéthylène basse densité linéaire (LLDPE)
c) de 15 à 60% d'éthylène-acétate de vinyle(EVA), et
d) de 0,5 à 8% d'agent anti-buée (AF).

2. La composition de la revendication 1, comprenant :
a) de 20 to 50% de polypropylène (PP)
b) de 10 à 40% de polyéthylène basse densité linéaire (LLDPE)
c) de 20 à 50% d'éthylène-acétate de vinyle (EVA), et
d) de 1 à 5 % d'agent anti-buée (AF).

3. La composition de la revendication 1 ou 2, comprenant :
a) de 30 to 45% de polypropylène (PP)
b) de 15 à 35% de polyéthylène basse densité linéaire (LLDPE)
c) de 30 à 45% d'éthylène-acétate de vinyle (EVA), et
d) de 1,5 à 3,5 % d'agent anti-buée (AF).

4. Film d'emballage multi-couche comprenant au moins une première couche extérieure scellable, une couche-barrière interne et une deuxième couche extérieure, où ladite couche extérieure scellable comprend une composition anti-buée de scellement selon les revendications 1 à 3.

5. Film d'emballage multi-couche selon la revendication 4 comprenant de 3 à 9 couches, préférentiellement de 3 à 7 couches, encore plus préférentiellement constitué de 5 couches.

6. Stratifié pouvant être obtenu par lamination d'un film d'emballage multi-couche selon les revendications 5 à 6 sur un réseau de support.

7. Le stratifié de la revendication 6 dans lequel
ledit réseau de support est un film de polyester orienté biaxiallement.

8. Emballage à ouverture facile comprenant un support, un produit chargé sur ledit support et un couvercle placé sur ledit produit et scellé sur une surface de scellement dudit support fermant ainsi l'emballage, dans lequel ledit couvercle est un film d'emballage multi-couche ou stratifié selon les revendications 4 ou 5 ou 6 ou 7.

9. Emballage à ouverture facile selon la revendication 8, dans lequel ledit support a une surface de scellement à base de PP et/ou de PE.

10. Emballage à ouverture facile comprenant un récipient flexible pouvant être obtenu par pliage convenable ou par auto-scellement du film multi-couche ou du stratifié selon les revendications 4 ou 5 ou 6 ou 7, et un produit emballé à l'intérieur de celui-ci.

11. Emballage à ouverture facile selon la revendication 10 dans lequel ledit le récipient flexible est une pochette ou un sac.

12. Utilisation d'un film ou d'un stratifié selon les revendications 4 ou 5 ou 6 ou 7 dans un emballage à ouverture facile, préférentiellement dans des applications d'operculage de plateau.

13. Utilisation d'un film ou d'un stratifié selon les revendications 4 ou 5 ou 6 ou 7 pour l'emballage de la viande fraîche.

14. Utilisation d'un film ou d'un stratifié selon les revendications 4 ou 5 ou 6 ou 7 pour l'emballage de plats préparés.

15. Utilisation selon la revendication 14 pour des plats préparés pasteurisables et réchauffables.
